# EUROPEAN PATENT SPECIFICATION

(11) **EP 1 840 412 B1**
(45) Date of publication and mention of the grant of the patent: **21.03.2012**
(21) Application number: 07006532.1
(22) Date of filing: 29.03.2007
(51) Int. Cl.: F16H 55/48

(54) **Bearing device equipped with resin-made pulley**
Tragevorrichtung mit Riemenscheibe aus Harz
Dispositif de revêtement équipé avec une poulie en résine

(30) Priority: 30.03.2006 JP 2006094137; 24.01.2007 JP 2007013983
(43) Date of publication of application: 03.10.2007
(73) Proprietor: JTEKT CORPORATION, Osaka-shi Osaka 542-8502 (JP)
(72) Inventor: Hamada, Kazuki, Osaka-shi Osaka 542-8502 (JP); Yanai, Kunio, Osaka-shi Osaka 542-8502 (JP); Yamamoto, Akira, Osaka-shi Osaka 542-8502 (JP); Arai, Hirokazu, Osaka-shi Osaka 542-8502 (JP)
(74) Representative: HOFFMANN EITLE

(56) References cited:
- EP-A- 1 162 379
- DE-U- 1 782 485
- FR-A- 2 605 070
- JP-A- 2001 317 616
- US-A- 6 129 455

## Description

### FIELD OF THE INVENTION

The present invention relates to a bearing device equipped with a resin-made pulley.

### BACKGROUND ART

Among conventional bearing devices equipped with a resin-made pulley, there are those ones which include a steel-made rolling bearing, and a resin-made pulley placed on an outer circumference of an outer ring of the rolling bearing, where the outer ring and the resin-made pulley are integrally molded. This type of bearing device adopts resin-made pulleys to achieve a reduction in weight or the like. However, the bearing device equipped with a resin-made pulley, while having advantages such as its light weight, has a problem, when the bearing device becomes high in temperature, that the resin-made pulley thermally expands in such a direction as to go farther from the outer ring, since the coefficient of thermal expansion of the resin is larger than that of steel. The bearing device equipped with a resin-made pulley has another problem that the fit between the resin pulley and the outer ring becomes weaker because of the high temperature so that a creep (rotation) occurs between the resin pulley and the outer ring.

Conventionally, JP 2001-317616 A describes a bearing device equipped with a resin-made pulley that can avoid the problem of the creep. In this bearing device equipped with a resin-made pulley, an eccentric groove that varies in depth and groove width in the circumferential direction of the outer ring is provided on the outer circumferential surface of the outer ring of a rolling bearing. The resin-made pulley is engaged in this eccentric groove so that even if the resin-made pulley has begun to rotate, the rotation of the resin-made pulley is stopped by a wedge effect of the eccentric groove so that the resin-made pulley rotates only at the beginning of the rotation, thus being prevented from permanent rotation. However, with the bearing device equipped with a resin-made pulley described above, minute rotations of the resin-made pulley that occurs at the beginning of rotation cannot be prevented. Thus, a further improvement of detent mechanisms is desired.

Another conventional bearing device equipped with a resin-made pulley capable of avoiding the creep problem is one in which a deep pin hole extending along the radial direction of an outer ring of the rolling bearing is provided on the outer circumferential surface of the outer ring. This bearing device equipped with a resin-made pulley, by virtue of the provision of the pin hole in the outer ring, prevents even minute rotations at the beginning of rotation of the resin-made pulley so that creeps never occur at high temperatures. However, this bearing device has a problem that it is difficult for the resin to flow into the pin hole without cavity during the resin formation process.

FR 2,605,070A discloses a roller bearing forming part of the background to the present application and constitute the closest prio art.

### SUMMARY OF THE INVENTION

In accordance with the present invention, there is provided a bearing device equipped with a resin-made pulley, comprising: a rolling bearing having an inner ring, an outer ring, and rolling elements; a resin-made pulley which has an inner circumferential surface in contact with an outer circumferential surface of the outer ring and which is integrally molded with the outer ring, wherein the outer circumferential surface of the outer ring has a cylindrical surface portion, and one or more cutout portions provided at one end portion of an axial direction of the outer ring so as to be opened on their outward side of the axial direction and spaced from one another at a specified interval in a circumferential direction of the outer ring, a bottom face of the or each cutout portion has a circular-arc shape as viewed in an axial sectional view of the outer ring running through the cutout portion, the bottom face of the or each cutout portion adjoins the cylindrical surface portion on an inward side of the axial direction and has a rectangular shape as viewed from outward of the radial direction, and the or each cutout portion has side faces parallel to a vertical bisector plane of the bottom face containing a center axis of the outer ring on both sides of a circumferential direction of the bottom face.

According to embodiments of the present invention, the or each cutout portion having the bottom face, which has a circular-arc shape as viewed in an axial sectional view of the outer ring running through the cutout portion and which adjoins the cylindrical surface portion on the inward side of the axial direction, is formed at one axial end portion of the outer circumferential surface of the outer ring. Therefore, a resin flow that runs along the bottom face can be generated during the resin molding process so that the resin can be filled into the cutout portion without leaving any clearances. Thus, the force with which the resin-made pulley clamps the outer ring can be made larger, so that creeping of the resin-made pulley at high temperatures can be suppressed.

Also in this case, the cutout portion has, on circumferential both sides of the bottom face, side faces generally parallel to the vertical bisector plane of the bottom face containing the center axis of the outer ring, so that a generally circumferential force (normal force) can be made to act on the resin-made pulley. Thus, even slight rotations (minute creeps) of the resin-made pulley against the outer ring can also be prevented at normal rotational speeds such as the rated rotational speed.

Also in this case, the bottom face has a circular-arc shape, as viewed in an axial sectional view of the outer ring running through the cutout portion. Therefore, a larger amount of the resin can be filled into the cutout portion, as compared with the case where the bottom face has a linear shape as viewed in the axial sectional view of the outer ring running through the cutout portion. Thus, the force with which the resin-made pulley clamps the outer ring can be made even larger.

Also in this case, since the bottom face has a circular-arc shape as viewed in an axial sectional view of the outer ring running through the cutout portion, the cutout portion can be formed with simplicity and low cost only by making a circular cutter into contact with one axial end portion of the outer ring. Moreover, since the cutout portion can be formed in short time, allowing the cycle time to be shortened, the productivity for the product can be improved to a great extent.

Accordingly, an advantage achievable with embodiments of the present invention is to provide a bearing device equipped with a resin-made pulley in which bearing device the outer ring is clamped by the resin-made pulley with such a large force that even minute creeps between the resin-made pulley and the outer ring can be prevented at rated rotational speed.

### BRIEF DESCRIPTION OF THE DRAWINGS

To enable a better understanding of the present invention, and to show how the same may be carried into effect, reference will now be made, by way of example only, to the accompanying drawings, in which:-
Fig. 1 is an axial sectional view of a bearing device equipped with a resin-made pulley according to an illustrative example;
Fig. 2 is an axial sectional view of an outer ring of the bearing device equipped with a resin-made pulley according to the illustrative example;
Fig. 3 is a radial sectional view sectioning through an cutout portion of the outer ring in the illustrative example;
Fig. 4 is an axial sectional view of a bearing device equipped with a resin-made pulley according to an embodiment of the present invention;
Fig. 5 is an axial sectional view of an outer ring of the bearing device equipped with a resin-made pulley according to the embodiment;
Fig. 6 is a radial sectional view sectioning through an cutout portion of the outer ring in the embodiment;
Fig. 7 is a view for explaining an example of a method for forming the cutout portion in the embodiment.

### DETAILED DESCRIPTION OF THE INVENTION

Hereinbelow, embodiments of the present invention and related illustrative examples will be described in detail, illustrated by reference to the accompanying drawings.

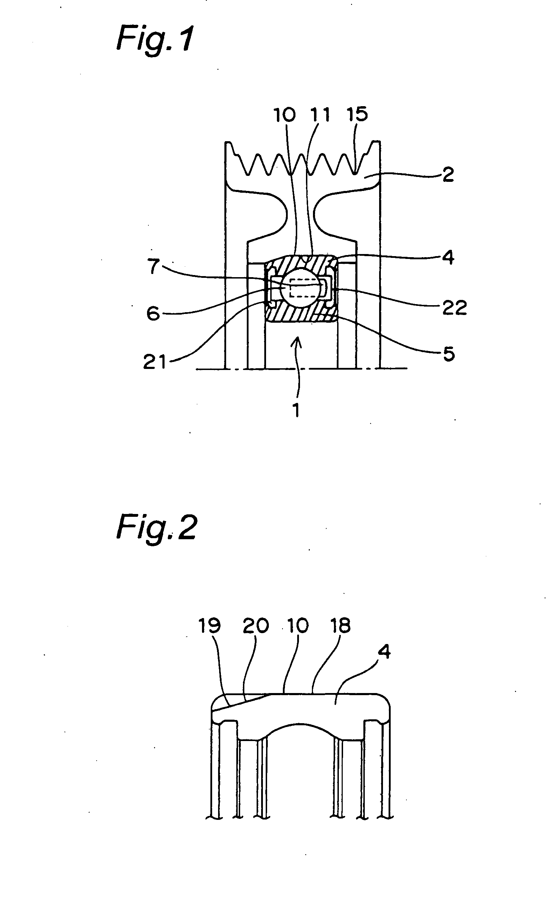

Fig. 1 is an axial sectional view of a bearing device equipped with a resin-made pulley according to an illustrative example. This bearing device equipped with a resin-made pulley includes a ball bearing 1 as an example of a rolling bearing, and a phenol resin-made pulley 2 as an example of a resin-made pulley.

The ball bearing 1 has an outer ring 4, an inner ring 5, and balls 6. The balls 6 are provided in a plurality between a raceway groove of the outer ring 4 and a raceway groove of the inner ring 5 so as to be held by a cage 7 and spaced from one another at a constant distance in a circumferential direction.

Phenol resin, which is the material of the phenol resin-made pulley 2, is made by mixing reinforced fiber or glass fiber or spherical silica powder or the like into a base-material resol type phenol resin. The phenol resin-made pulley 2 has an inner circumferential surface 11 which is in contact with an outer circumferential surface 10 of the outer ring 4. The phenol resin-made pulley 2 and the outer ring 4 are integrally molded by injection molding. On the outer circumferential side of the phenol resin-made pulley 2 are formed a plurality of belt fitting grooves 15 to which an unshown belt is to be fitted. It is noted that in Fig. 1, seal members 21, 22 are placed at both axial end portions of the balls 6. These seal members 21, 22 seal the raceway grooves of the outer ring 4 and the inner ring 5 as well as the balls 6 against the outside.

Fig. 2 is an axial sectional view of the outer ring 4. As shown in Fig. 2, the outer circumferential surface 10 of the outer ring 4 has a cylindrical surface portion 18 and cutout portions (slits) 19. The cutout portions 19 are provided two in number at one axial end portion of the outer ring 4 so as to be spaced from each other with a spacing in the circumferential direction of the outer ring 4. The cutout portion 19 is opened in the axial direction of the outer ring 4 at its one end. Also, the or each cutout portion 19 has a sloped surface 20 which starts from an opening-side axial end of the cutout portion 19 so as to be sloped radially outward of the outer ring 4 progressively with increasing nearness to the axial center and to adjoin the cylindrical surface portion 18 on the other side of the axial direction opposite to the opening side. The sloped surface 20 has a generally rectangular shape as viewed from radial outward.

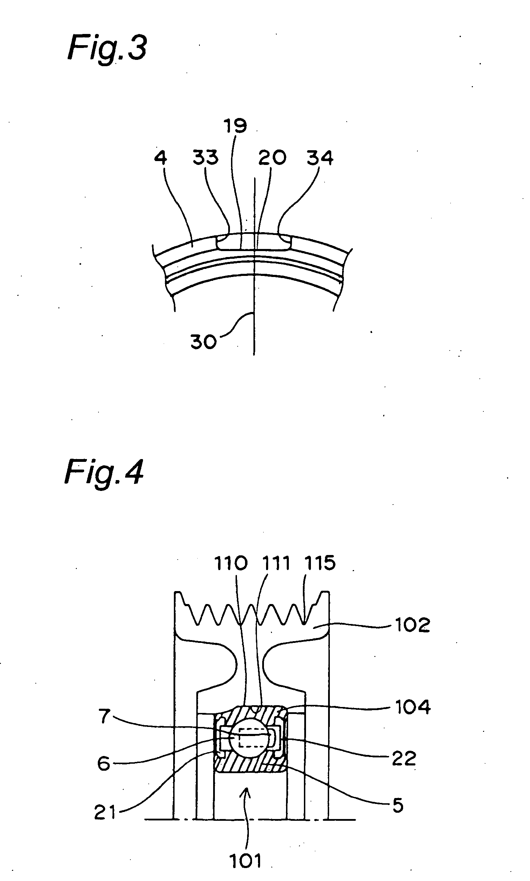

Fig. 3 is a radial sectional view of the outer ring 4 that runs through the cutout portion 19. As shown in Fig. 3, on circumferential both sides of the sloped surface 20 in a cross section perpendicular to a center axis of the outer ring 4, the cutout portion 19 has side faces 33, 34 generally parallel to a vertical bisector plane 30 of the sloped surface 20 containing the center axis of the outer ring 4.

The present inventor formed various shapes of recessed portions on the outer circumferential surface of the outer ring, as well as bearing devices equipped with a resin-made pulley by using those outer rings, and looked into the degree of likelihood that creeps would occur in the above bearing devices equipped with a resin-made pulley and having different shapes of the recessed portions. In more detail, with a specified magnitude of rotational power applied to each resin-made pulley for a specified time at high temperature, whether or not creeps would occur was observed while the resin-made pulley was held rotating at a rotational speed higher than a rated rotational speed, the observation having been done for the following bearing devices equipped with a resin-made pulley. A bearing device in which a generally rectangular-in-cross-section cutout portion opened only radially as viewed in the axial sectional view of the outer ring was provided on the outer circumferential surface of the outer ring (hereinafter, referred to as Comparative Example 1), a bearing device in which a dimple-like hole opened only radially as viewed in the axial sectional view of the outer ring was provided on the outer circumferential surface of the outer ring (hereinafter, referred to as Comparative Example 2), a bearing device in which a rectangular-in-cross-section cutout portion opened on radial-and-axial one side of the outer ring as viewed in the axial sectional view of the outer ring and in which the cutout portion had no sloped surface was provided at one end portion of the outer circumferential surface of the outer ring (hereinafter, referred to as Comparative Example 3), a bearing device in which a cutout portion having a bottom face being generally parallel to a cylindrical outer circumferential surface of the outer ring in the axial sectional view and adjoining the cylindrical outer circumferential surface of the outer ring on both circumferential sides, the cutout portion being formed by so-called D cut, was provided at one end portion of the outer circumferential surface of the outer ring (hereinafter, referred to as Comparative Example 4), a bearing device in which a radially extending pin hole was provided on the outer circumferential surface of the outer ring (hereinafter, referred to as Comparative Example 5), and the bearing device according to the illustrative example. This experiment was performed under identical conditions for all the bearing devices, and the same experiment was performed a plurality of times for each of the bearing devices.

As a result, with the bearing device in Comparative Example 1, it was found that air in the cutout portion would not come out during resin molding process in some cases, causing occurrence of burning or carbonization upon involvement of air. With the bearing device in Comparative Example 2, air involvement did not occur so that neither burning nor carbonization would not occur around the hole, while creeps occurred because of a small effect for preventing the resin-made pulley from rotating against the outer ring. With the bearing device in Comparative Example 3, it was found that the resin flow would be disturbed at around a side face of the cutout portion on one side of the axial direction opposite to the opening side during the resin molding process, causing air to be involved in the cutout portion in some cases. With the bearing device in Comparative Example 4, air involvement did not occur so that neither burning nor carbonization would not occur around the hole, while occurrence of creeps was observed because of a small clamping force of resin-made pulley to the outer ring. With the bearing device in Comparative Example 5, it was difficult to make the resin to flow into the pin hole without clearances during the resin molding process so that clearances were formed between the pin hole and the resin. Furthermore, creeps were observed because of a small force for the resin-made pulley to hold the outer ring due to the clearances.

Meanwhile, with the bearing device in the illustrative example, the resin was able to be filled into the cutout portion so as to eliminate any clearances, without occurrence of burning or carbonization around the cutout portion as well as without occurrence of minute creeps. As apparent from this, when a cutout portion having a sloped surface and side faces as described in the illustrative example is formed on the outer ring, the force with which the resin-made pulley clamps the outer ring can be made considerable large so that minute creeps at the rated rotational speed can be prevented and moreover burning and carbonization around the cutout portion can be prevented.

The reason why even minute creeps do not occur in the bearing device according to the illustrative example is that the bearing device equipped with a resin-made pulley, in which the cutout portion has two side faces generally parallel to the vertical bisector plane of the sloped surface of the cutout portion containing the center axis of the outer ring, is enabled to exert a very large generally circumferential force (normal force) on the resin-made pulley by the two side faces.

According to the bearing device equipped with a resin-made pulley in the illustrative example, since a cutout portion 19 having a rectangular sloped surface 20 that adjoins a cylindrical surface portion 18 on one side of the axial direction opposite to the opening side, the cutout portion being sloped radially outward of an outer ring 4 along a direction starting from an opening-side end of the axial direction and approaching the axial center, is formed at one axial end portion of an outer circumferential surface 10 of the outer ring 4, a resin flow that runs along the sloped surface 20 can be formed during the resin molding process so that the resin can be filled to the cutout portion 19 without leaving any clearances. Accordingly, the force with which the phenol resin-made pulley holds the outer ring 4 can be made large, so that creeping of the phenol resin-made pulley at high temperatures can be suppressed as well as occurrence of burning and carbonization around the cutout portion 19 can be prevented.

Further, according to the bearing device equipped with a resin-made pulley in the illustrative example, since the cutout portion 19 has side faces 33, 34 generally parallel to the vertical bisector plane 30 of the sloped surface 20 containing the center axis of the outer ring 4 on circumferential both sides of the sloped surface 20 in a cross section perpendicular to the center axis of the outer ring 4, a generally circumferential force (normal force) can be made to act on the resin-made pulley so that even minute rotations at the rated rotational speed can be prevented.

In the bearing device equipped with a resin-made pulley according to the illustrative example, two cutout portions 19 are formed with a circumferential spacing from each other at one axial end portion of the outer circumferential surface 10 of the outer ring 4. However it is also allowed to form one cutout portion at one axial end portion of the outer circumferential surface of the outer ring. It is also possible to form three or more cutout portions at specified circumferential intervals at an axial end portion of the outer circumferential surface of the outer ring. For the present invention, it is allowed to form cutout portions at both axial end portions of the outer circumferential surface of the outer ring.

Besides, in the bearing device equipped with a resin-made pulley according to the illustrative example, the pulley 2 made of phenol resin is adopted. A resin-made pulley can be made of PPS (polyphenylene sulfide) resin or other resins other than phenol resin.

In the bearing device equipped with a resin-made pulley according to the illustrative example, the rolling bearing is implemented by a ball bearing 1. However, it is needless to say that the rolling bearing may be a roller bearing or the like other than ball bearings.

Fig. 4 is an axial sectional view of a bearing device equipped with a resin-made pulley according to an embodiment of the present invention.

The bearing device equipped with a resin-made pulley according to the embodiment differs from that of the illustrative example only in that its cutout portion has a different shape.

For the bearing device according to the embodiment, the same components as those of the bearing device of the illustrative example are designated by the same reference numerals and their detailed description is omitted.

This bearing device includes a ball bearing 101 as an example of the rolling bearing, and a phenol resin-made pulley 102 as an example of the resin-made pulley.

The ball bearing 101 has an outer ring 104, an inner ring 5, and balls 6. The balls 6 are provided in a plurality between a raceway groove of the outer ring 104 and a raceway groove of the inner ring 5 so as to be held by a cage 7 and spaced from one another at a constant distance in a circumferential direction.

Phenol resin, which is the material of the phenol resin-made pulley 102, is made by mixing reinforced fiber or glass fiber or spherical silica powder or the like into a base-material resol type phenol resin. The phenol resin-made pulley 102 has an inner circumferential surface 111 which is in contact with an outer circumferential surface 110 of the outer ring 104. The phenol resin-made pulley 102 and the outer ring 104 are integrally molded by injection molding. On the outer circumferential side of the phenol resin-made pulley 102 are formed a plurality of belt fitting grooves 115 to which a belt (not shown) is to be fitted.

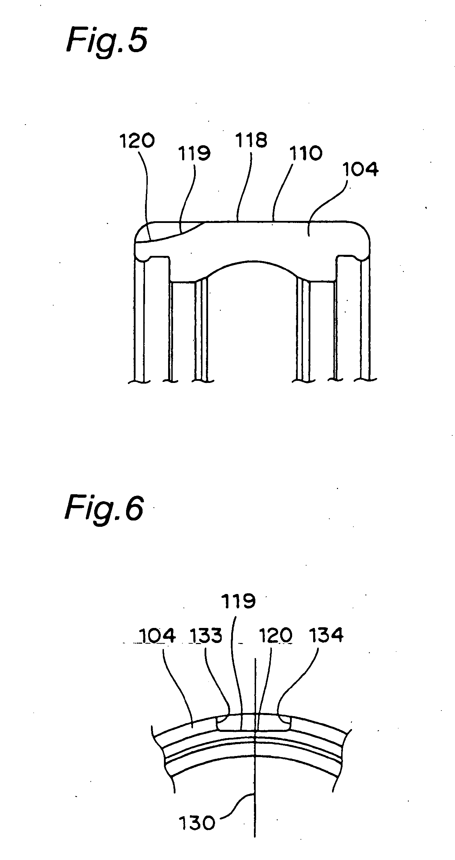

Fig. 5 is an axial sectional view of the outer ring 104. As shown in Fig. 5, the outer circumferential surface 110 of the outer ring 104 has a cylindrical surface portion 118 and cutout portions (slits) 119. The cutout portions 119 are provided two in number at one axial end portion of the outer ring 104 so as to be spaced from each other with a spacing in the circumferential direction of the outer ring 104. The or each cutout portion 119 is opened in the axial direction of the outer ring 104 at its one end.

A bottom face 120 of the cutout portion 119 has a rectangular shape as viewed from radial outward. In an axial sectional view sectioning an outer ring 104 by a vertical bisector plane of the bottom face 120 containing the center axis of the outer ring 104 (Fig. 5 shows this sectional view), the bottom face 120 of the cutout portion 119 has a circular-arc shape. The bottom face 120 of the cutout portion 119 adjoins to a cylindrical surface portion 118 on its one side of the axial direction opposite to the opening side (i.e., on the inward side of the axial direction).

A radial distance (precisely, distance in the radial direction of the outer ring 104) between a plane, which contains the center axis of the outer ring 104 and perpendicular to the vertical bisector plane, and the bottom face 120 increases along a direction going inward of the axial direction.

Fig. 6 is a radial sectional view of the outer ring 104 that runs through the cutout portion 119. As shown in Fig. 6, the cutout portion 119 has, on both sides of the circumferential direction of the bottom face 120 (the circumferential direction of the outer ring 104), side faces 133, 134 generally parallel to the vertical bisector plane 130 of the bottom face 120 containing the center axis of the outer ring 104.

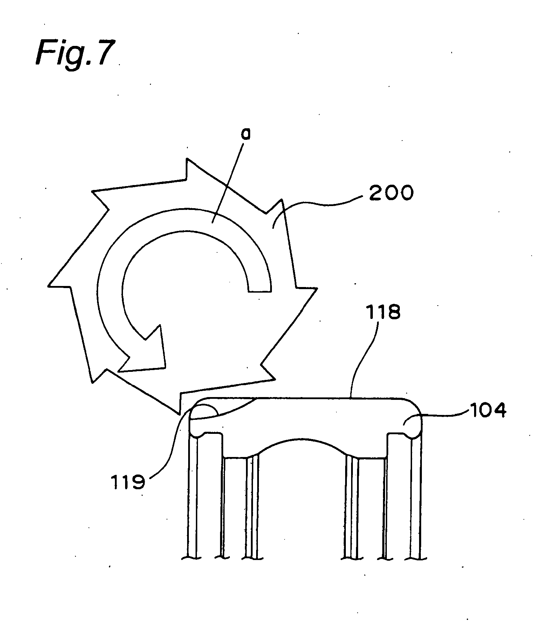

Fig. 7 is a view for explaining an example of a method for forming the cutout portion 119.

The cutout portion 119, as shown in Fig. 7, is formed by, while rotating a circular cutter 200 around its center axis along a direction of arrow a, making the cutter 200 into contact with one axial end portion of the outer circumferential surface of the outer ring 104.

The present inventor performed the same experiment as that described in the illustrative example also with the bearing device equipped with a resin-made pulley of the second embodiment. Also in the embodiment, as in the illustrative example, it was verified that the resin was able to be filled into the cutout portion 119 without leaving clearances and without occurrence of burning or carbonization around the cutout portion 119 as well as without occurrence of minute creeps. It was also verified that for the bearing device equipped with a resin-made pulley of the embodiment, the force with which the resin-made pulley 102 would clamp the outer ring 104 was able to be further enhanced, as compared with the bearing device equipped with a resin-made pulley of the illustrative example.

According to the bearing device equipped with a resin-made pulley of the embodiment, the cutout portion 119 having the bottom face 120, which has a circular-arc shape as viewed in an axial sectional view of the outer ring 104 sectioning through the cutout portion 119 and which adjoins the cylindrical surface portion 118 on the inward side of the axial direction, is formed at one axial end portion of the outer circumferential surface of the outer ring 104. Therefore, a resin flow that runs along the bottom face 120 can be generated during the resin molding process so that the resin can be filled into the cutout portion 119 without leaving any clearances. Thus, the force with which the resin-made pulley 102 clamps the outer ring 104 can be made larger, so that creeping of the phenol resin-made pulley 102 at high temperatures can be suppressed.

Also, according to the bearing device equipped with a resin-made pulley of the embodiment, the cutout portion 119 has, on circumferential both sides of the bottom face 120, the side faces 133, 134 generally parallel to the vertical bisector plane of the bottom face 120 containing the center axis of the outer ring 104, so that a generally circumferential force (normal force) can be made to act on the resin-made pulley 102. Thus, even slight rotations (minute creeps) of the resin-made pulley 102 against the outer ring 104 can also be prevented at normal rotational speeds such as the rated rotational speed.

Also, according to the bearing device equipped with a resin-made pulley of the embodiment, the bottom face 120 has a circular-arc shape, as viewed in an axial sectional view of the outer ring 104 sectioning through the cutout portion 119. Therefore, a larger amount of the resin can be filled into the cutout portion 119, as compared with the first embodiment, in which the sloped surface 20, which is the bottom face, has a linear shape as viewed in the axial sectional view of the outer ring 4 sectioning through the cutout portion 19. Thus, the force with which the resin-made pulley 102 clamps the outer ring 104 can be made even larger.

Also, according to the bearing device equipped with a resin-made pulley of the embodiment, since the bottom face 120 has a circular-arc shape as viewed in an axial sectional view of the outer ring 104 sectioning through the cutout portion 119, the cutout portion 119 can be formed with simplicity and low cost only by making the circular cutter 200 into contact with one axial end portion of the outer circumferential surface of the outer ring 104. Moreover, since the cutout portion 119 can be formed in short time, allowing the cycle time to be shortened, the productivity for the product can be improved to a great extent.

In addition, in the bearing device equipped with a resin-made pulley of the embodiment, two cutout portions 119 are formed with a circumferential spacing from each other at one axial end portion of the outer circumferential surface 110 of the outer ring 104. However, for the present invention, it is also allowed that one cutout portion is formed at one axial end portion of, the outer circumferential surface of the outer ring. Further, three or more cutout portions may also be formed with circumferential spacings from one another at one axial end portion of the outer circumferential surface of the outer ring. Furthermore, for the present invention, cutout portions may be formed at both axial end portions of the outer circumferential surface of the outer ring.

Besides, in the bearing device equipped with a resin-made pulley according to the embodiment, the pulley 2 made of phenol resin is adopted. In the present invention, a resin-made pulley can be made of PPS (polyphenylene sulfide) resin or other resins other than phenol resin.

In the bearing device equipped with a resin-made pulley according to the embodiment, the rolling bearing is implemented by a ball bearing 101. However, it is needless to say for the present invention that the rolling bearing may be a roller bearing or the like other than ball bearings.

Embodiments of the invention being thus described, it will be obvious that the same may be varied in many ways. Such variations are not to be regarded as a departure from the scope of the invention as defined by the following claims.

## Claims

1. A bearing device equipped with a resin-made pulley, comprising:
a rolling bearing (101) having an inner ring (5), an outer ring (4), and rolling elements (6);
a resin-made pulley (102) which has an inner circumferential surface (111) in contact with an outer circumferential surface (110) of the outer ring (104) and which is integrally molded with the outer ring (104), wherein
the outer circumferential surface (110) of the outer ring (104) has a cylindrical surface portion (118), and one or more cutout portions (119) provided at one end portion of an axial direction of the outer ring (104) so as to be opened on their outward side of the axial direction and spaced from one another at a specified interval in a circumferential direction of the outer ring (104),
a bottom face (120) of the or each cutout portion (119) has a circular-arc shape as viewed in an axial sectional view of the outer ring (104) running through the cutout portion (119),
the bottom face (120) of the or each cutout portion (119) adjoins the cylindrical surface portion (118) on an inward side of the axial direction and has a rectangular shape as viewed from outward of the radial direction, and
the or each cutout portion (119) has side faces (133, 133) parallel to a vertical bisector plane (130) of the bottom face (120) containing a center axis of the outer ring (104) on both sides of a circumferential direction of the bottom face (120).

## Patentansprüche

1. Lagervorrichtung, die mit einer Seilrolle aus Harz ausgestattet ist, mit:
einem Wälzlager (101) mit einem inneren Ring (5), einem äußeren Ring (4) und Wälzelementen (6);
einer Seilrolle aus Harz (102), die eine innere Umfangsoberfläche (101) aufweist, die in Kontakt mit einer äußeren Umfangsoberfläche (101) des äußeren Rings (104) ist und integral mit dem äußeren Ring (104) geformt ist, wobei
die äußere Umfangsoberfläche (110) des äußeren Rings (104) einen zylindrischen Oberflächenabschnitt (118) und einen oder mehrere Ausschnittsabschnitte (119) aufweist, die an einem Endabschnitt einer axialen Richtung des äußeren Rings (104) derart vorgesehen sind, dass sie an ihrer äußerlichen Seite der axialen Richtung geöffnet sind und voneinander in einem bestimmten Abstand in einer Umfangsrichtung des äußeren Rings (104) beabstandet sind,
eine Bodenfläche (120) des oder jedes Ausschnittsabschnitts (119) eine kreisförmige Bogenform aufweist, wie in einem axialen Schnittbild des äußeren Rings (104) betrachtet, das durch den Ausschnittsabschnitt (119) verläuft,
die Bodenfläche (120) des oder jedes Ausschnittsabschnitts (119) den zylindrischen Oberflächenabschnitt (118) an einer innerlichen Seite der axialen Richtung angrenzt und eine rechtwinklige Form aufweist, wie von Außen der radialen Richtung betrachtet,
der oder jeder Ausschnittsabschnitt (119) Seitenflächen (133, 133) aufweist, die parallel zu einer vertikalen Mittelsenkrechten-Ebene (130) der Bodenfläche (120) sind, die eine Mittelachse des äußeren Rings (104) an beiden Seiten einer Umfangsrichtung der Bodenfläche (120) aufweist.

## Revendications

1. Dispositif de palier équipé d'une poulie en résine, comprenant :
un palier à roulement (101) ayant une bague interne (5), une bague externe (4) et des éléments de roulement (6) ;
une poulie en résine (102) qui a une surface circonférentielle interne (111) en contact avec une surface circonférentielle externe (110) de la bague externe (104) et qui est moulée de manière solidaire avec la bague externe (104), dans lequel :
la surface circonférentielle externe (110) de la bague externe (104) a une partie de surface cylindrique (118), et une ou plusieurs découpes (119) prévues au niveau d'une partie d'extrémité d'une direction axiale de la bague externe (104) afin d'être ouvertes sur leur côté externe de la direction axiale et espacées les unes des autres à un intervalle spécifié dans une direction circonférentielle de la bague externe (104),
une face inférieure (120) de la ou de chaque partie découpée (119) a une forme d'arc circulaire, lorsqu'elle est observée sur une vue en coupe axiale de la bague externe (104) s'étendant à travers la partie découpée (119),
la face inférieure (120) de la ou de chaque partie découpée (119) est attenante à la partie de surface cylindrique (118) sur un côté interne de la direction axiale et a une forme rectangulaire lorsqu'elle est observée de l'extérieur de la direction radiale, et
la ou chaque partie découpée (119) a des faces latérales (133, 133) parallèles à un plan de bissectrice verticale (130) de la face inférieure (120) contenant un axe central de la bague externe (104) des deux côtés d'une direction circonférentielle de la face inférieure (120).
